# EUROPÄISCHE PATENTSCHRIFT

(11) **EP 1 440 721 B1**
(45) Veröffentlichungstag und Bekanntmachung des Hinweises auf die Patenterteilung: **13.05.2009**
(21) Anmeldenummer: 04100095.1
(22) Anmeldetag: 13.01.2004
(51) Int. Cl.: B01D 36/00, B01D 29/21

(54) **Selbstentlüftendes Filterelement für eine Kraftstofffilteranordnung**
Self-venting filter element for a fuel filter assembly
Elément filtrant autopurgeur pour un filtre à carburant

(30) Priorität: 24.01.2003 DE 10302935
(43) Veröffentlichungstag der Anmeldung: 28.07.2004
(73) Patentinhaber: MANN+HUMMEL GmbH, 71638 Ludwigsburg (DE)
(72) Erfinder: Knickmann, Kai, 71686, Remseck (DE); Mack, Klaus, 74239, Hardthausen (DE)

(56) Entgegenhaltungen:
- EP-A- 1 124 056
- DE-A- 19 519 352
- DE-A- 19 538 883
- DE-A- 19 716 085
- FR-A- 1 445 709

## Beschreibung

Die Erfindung betrifft ein Filterelement für eine Kraftstofffilteranordnung. Solche Kraftstofffilteranordnungen werden häufig im Zusammenhang mit Verbrennungsmotoren für Kraftfahrzeuge vorgesehen. Dabei tritt das Problem auf, dass sich im Filtergehäuse des Filterelements Luft ansammelt, die zu Störungen im Betrieb des Verbrennungsmotors führen, wenn die Luft in die Einspritzanlage des Verbrennungsmotors gelangt.

Zur Lösung solcher Probleme wurde vorgeschlagen, an geeigneter Stelle im Luftfiltergehäuse Bohrungen vorzusehen, durch die Luft nach außen entweichen kann. Dabei ist problematisch, dass auch kraftstoffhaltige Dämpfe austreten können, was im Hinblick auf immer strenger werdende Umweltbestimmungen vermieden werden soll.

Aus der DE 195 19 352 ist eine Filteranorcinung bekannt, die zur Filtrierung von Kraftstoff dient mit einem Filterelement das zick-zack-förmig gestaltet ist und Endscheiben aufweist und in einem Filtergehäuse anordenbar ist. Die Entlüftung des Filtergehäuses erfolgt über ein stationär angeordnetes Mittelrohr. Das Mittelrohr verbleibt in dem Filtergehäuse, während ein Filterelement ausgetauscht wird. Es ist insofern mit dem Filtergehäuse verbunden.

Der Erfindung liegt die Aufgabe zugrunde, eine Kraftstofffilteranordnung sowie ein Filterelement bereitzustellen, mit dem ein zuverlässiger Betrieb eines Verbrennungsmotors auch bei lufthaltigem Kraftstoff gewährleistet werden kann.

Diese Aufgabe wird durch den Gegenstand des unabhängigen Anspruchs gelöst. Vorteilhafte Weiterbildungen ergeben sich aus den abhängigen Ansprüchen.

Die Erfindung sieht ein Filterelement vor, das eine erste Endscheibe und eine zweite Endscheibe aufweist. Zwischen den beiden Endscheiben erstreckt sich ein Filtermedium, das das Filterelement in eine Innenseite und in eine Außenseite aufteilt. Zwischen der ersten Endscheibe und der zweiten Endscheibe erstreckt sich außerdem eine Rückführleitung, die jeweils in einer Austrittsöffnung auf der Außenseite des Filterelements mündet.

Mit dem erfindungsgemäßen Filterelement wird vorteilhafterweise eine Entlüftung des Filtereinbauraums über einen im Filterelement integrierten Entlüftungskanal bewerkstelligt. Im Filterbetrieb wird die Luft über den Entlüftungskanal in den oberen Bereich des Filterelements und von dort über einen Rücklaufkanal zum Tank des Kraftfahrzeugs geleitet. Dadurch ergibt sich der Vorteil, dass die in dem Kraftstoff eingeschlossene Luft weder nach außen abgeleitet, noch in Richtung der Einspritzpumpe bzw. des Verbrennungsmotors weitergeleitet wird. Die Erfindung lässt sich bei allen Flüssigkeitsfiltern einsetzen, wo Entlüftungsprobleme gelöst werden müssen. Insofern ist sie also nicht auf Filteranordnungen für Verbrennungsmotoren beschränkt.

Die Austrittsöffnung der erfindungsgemäßen Rückführleitung hat vorzugsweise einen Durchmesser von ca. 0,2 mm bis 0,5 mm. Dadurch ist gewährleistet, dass vor allen Dingen Luft durch die Rückführleitung zurückgeführt wird, die derart geringe Austrittsöffnungsdurchmesser leichter durchtritt als beispielsweise Dieselkraftstoff.

Erfindungsgemäß weist wenigstens eine der Endscheiben des Filterelements einen ersten Filterdichtbereich auf, der zur Außenseite des Filterelements hingerichtet ist. Außerdem ist ein zweiter Filterdichtbereich vorgesehen, der zur Innenseite des Filterelements gerichtet ist. Die Austrittsöffnung ist dabei zwischen dem ersten Filterdichtbereich und dem zweiten Filterdichtbereich angeordnet. Dadurch wird ein zuverlässiger Betrieb des erfindungsgemäßen Filterelements gewährleistet. Auf besonders einfache Weise kann dabei überschüssige Luft abgeführt werden, ohne den Filterbetrieb zu stören.

Das erfindungsgemäße Filterelement lässt sich einfach herstellen, wenn die Rückführleitung integral in einem als Spritzgussteil ausgebildeten Filterelementträger ausgebildet wird, auf dem das Filtermedium vorgesehen ist. In Abwandlung dazu kann die Rückführleitung auch als Leitungsabschnitt ausgebildet sein, der in Austrittsöffnungen in den Endscheiben geführt ist. Ein solcher Leitungsabschnitt kann beispielsweise ein metallisches Rohr oder ein Kunststoffrohr sein, das an den Enden so ausgebildet ist, dass es in den Austrittsöffnungen geführt wird.

Die Erfindung ist in der Zeichnung anhand zweier Ausführungsbeispielen veranschaulicht, die in einer einzigen Figur zusammengefasst sind.

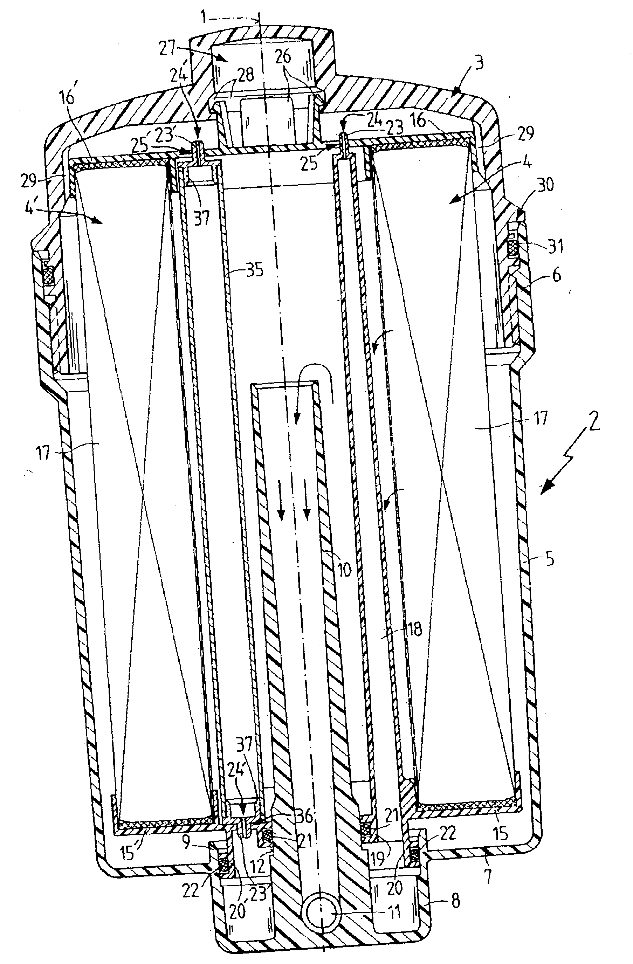

Figur 1 zeigt einen Querschnitt durch zwei erfindungsgemäße Kraftstofffilteranordnungen, die an einer Symmetrieachse 1 zusammengesetzt dargestellt sind. Dabei ist in der rechten Seite der Figur 1 das erste Ausführungsbeispiel zu einer Kraftstofffilteranordnung dargestellt und in der Figur 1 links gelegenen Hälfte von Figur 1 ist ein zweites Ausführungsbeispiel einer erfindungsgemäßen Kraftstofffilteranordnung gezeigt. Gleiche Teile haben die selben Bezugsziffern.

Die Kraftstofffilteranordnung gliedert sich in ein Kraftstofffiltergehäuse 2, in einen auf dem Kraftstofffiltergehäuse 2 aufgesetzten Gehäusedeckel 3 sowie in ein in das Kraftstofffiltergehäuse 2 eingesetztes Filterelement 4 bzw. 4'. Dabei weist das Filterelement 4 gemäß dem ersten Ausführungsbeispiel geringe Unterschiede zum Filterelement 4' gemäß dem zweiten Ausführungsbeispiel auf, wie im Zusammenhang mit dem Zusammenwirken des Kraftstofffiltergehäuses 2 und dem Filterelement 4 bzw. dem Filterelement 4' untenstehend erläutert werden wird.

Das Kraftstofffiltergehäuse 2 gliedert sich in einen zylindrischen Topfbereich 5, der sich obenseitig zu einer Deckelaufnahme 6 erweitert, und in einen Gehäuseboden 7, in dem nach unten abstehend eine Sammelkammer 8 ausgeformt ist. Im Bereich zwischen dem Gehäuseboden 7 und der Sammelkammer 8 ist ein nach oben über den Gehäuseboden 7 abstehender Rückhaltekragen 9 ausgebildet. Außerdem ist ausgehend von der Sammelkammer 8 eine in dieser Ansicht nicht sichtbare Rücklauföffnung vorgesehen, die zu einem in dieser Ansicht ebenfalls nicht gezeigten Kraftstofftank eines Kraftfahrzeugs führt und zwar über eine nicht sichtbare Rücklaufleitung.

Ausgehend von der Sammelkammer 8 erstreckt sich ein Führungsdom 10 entlang der Symmetrieachse 1 nach oben im das Innere des Topfbereichs 5. Der Führungsdom 10 ist dabei im Inneren hohl ausgebildet und verjüngt sich nach oben hin. An der Unterseite des Führungsdoms 10 ist eine Ablaufleitung 11 vorgesehen, die mit einer in dieser Ansicht nicht sichtbaren Ablaufleitung verbunden ist, die zum Verbrennungsraum führt. Etwa in der Höhe des den Führungsdom 10 umgebenden Rückhaltekragens 9 ist am Führungsdom 10 ein Dichtabsatz 12 ausgebildet.

Das Filterelement 4 gemäß dem ersten Ausführungsbeispiel gliedert sich in eine untere Endscheibe 15, in eine obere Endscheibe 16 sowie in ein zwischen der unteren Endscheibe 15 und der oberen Endscheibe 16 umlaufend aufgenommenes Filtermedium 17. Sowohl die obere Endscheibe 16 als auch die untere Endscheibe 15 sind aus Kunststoff hergestellt, und zwar in einem Spritzgussverfahren.

Die untere Endscheibe 15 ist dabei mit einer sich nach oben erstreckenden Rücklaufleitung 18 ausgebildet, die im Übergangsbereich zu der unteren Endscheibe 15 innenseitig bündig mit einer inneren Dichtringaufnahme 19 und nach außen mit einer umlaufenden äußeren Dichtringaufnahme 20 abschließt. Dabei ist in der inneren Dichtringaufnahme 19 ein innerer Dichtring 21 vorgesehen und in der äußeren Dichtringaufnahme 20 ist ein äußerer Dichtring 22 vorgesehen. Der innere Dichtring 21 dichtet dabei die untere Endscheibe 15 gegenüber dem Führungsdom 10 ab. Der äußere Dichtring 22 dichtet die untere Endscheibe 15 gegenüber dem Rückhaltekragen 9 ab.

Die Rücklaufleitung 18 verjüngt sich nach oben hin bis zu einer Führungsspitze 23, in der eine Düsenöffnung 24 mit einem Durchmesser von ca. 0,2 mm bis 0,5 mm vorgesehen ist.

Die obere Endscheibe 16 ist an der Stelle des Durchtritts der Führungsspitze 23 mit einer Führungsöffnung 25 versehen. Im Bereich der oberen Endscheibe 16 um die Symmetrieachse 1 herum ist eine vierteilige Halteklammer 26 ausgebildet, die mit dem Gehäusedeckel 3 in Kontakt tritt. Die Halteklammer 26 ist hier als Schnapphaken ausgebildet. In einer nicht gezeigten Variante ist er mehrteilig ausgeführt, z. B. 6- oder 8-teilig.

Zum Verschnappen von Deckel und Filterelement gibt es noch andere Möglichkeiten.

Der Gehäusedeckel 3 weist hierzu eine an die Halteklammer 26 angepasste Rastkammer 27 mit einer innen umlaufenden Rastnut 28 auf, in die die Halteklammer 26 bei aufgesetztem Gehäusedeckel 3 auf das Kraftstofffiltergehäuse 2 einrastet. Der Gehäusedeckel 3 ist im Übergangsbereich zum Filterelement 4 mit Durchtrittskanälen 29 versehen, die einen Durchtritt von Kraftstoff und Luft in den oberen Bereich des Gehäusedeckels 3 gestatten, und zwar an der Außenseite des Filterelements 4 vorbei. In denjenigen Stellen des Gehäusedeckels 3, in denen keine Durchtrittskanäle 29 vorgesehen sind, ist der Gehäusedeckel 3 so ausgebildet, dass dieser geführt an den Außenbereichen der oberen Endscheibe 16 anliegt. Diese Führung ist besonders bei der Montage nützlich. Eine Berührung ist nicht zwingend notwendig.

An seiner Außenseite ist der Gehäusedeckel 6 mit einem Dichtabsatzbereich 30 versehen, in dem ein Deckeldichtring 31 den Übergangsbereich zwischen Gehäusedeckel 3 und Deckelaufnahme 6 gegen Durchtritt von Kraftstoff auf die Außenseite des Kraftstofffiltergehäuses 2 abdichtet.

Zum Zusammenbau des Filterelements 4 kann wie folgt vorgegangen werden. Zunächst wird die untere Endscheibe 15 bereitgestellt, wobei der innere Dichtring 21 und der äußere Dichtring 22 in die innere Dichtringaufnahme 19 bzw. in die äußere Dichtringaufnahme 20 eingesetzt sind. Danach wird das Filtermedium 17 auf die untere Endscheibe 15 aufgesetzt. Schließlich wird die obere Endscheibe 16 auf das Filtermedium 17 aufgesetzt, wobei die Führungsspitze 23 in die Führungsöffnung 25 eingeführt wird.

Das so hergestellte Filterelement 4 wird anschließend in den Gehäusedeckel 3 eingesetzt. Das Eindrücken erfolgt dabei so weit, bis die Halteklammer 26 hörbar in der Rastnut 28 einrastet. Danach wird der Gehäusedeckel 3 auf das Filterelement 4 aufgesetzt, wobei der Dichtabsatz 30 innerhalb der Deckelaufnahme 6 eingeführt wird. Durch Eindrücken des Gehäusedeckels 3 in die Deckelaufnahme 6 wird ein dichter Verbund hergestellt. Das Filterelement 4 wird dabei so weit in das Kraftstofffiltergehäuse 2 eingedrückt, bis der innere Dichtring 21 am Dichtabsatz 12 anliegt. Die untere Endscheibe 15 wird anschließend noch weiter gedrückt, bis der äußere Dichtring 22 dicht im Inneren des Rückhaltekragens 9 aufgenommen ist.

Im Betrieb verhält sich die Kraftstofffilteranordnung wie folgt. Ausgehend vom Kraftstofftank wird Kraftstoff auf die Innenseite des Filtergehäuses 2 gepumpt. Dadurch füllt sich der Topfbereich 5 mit Kraftstoff. Der Kraftstoff tritt dann durch das Filtermedium 17 hindurch. Der Druck des nachströmenden Kraftstoffs drückt sich im Inneren des Kraftstofffiltergehäuses 2 befindliches Kraftstoff/Luft-Gemisch durch die Durchtrittskanäle 29. Von dort aus durchtritt das Kraftstoff/LuftGemisch die Düsenöffnung 24 und tritt in das Innere der Rücklaufleitung 18 ein. Von dort aus wird die Luft durch die Rücklaufleitung 18 zurück in den Kraftstofftank gepumpt. Dabei ist von Bedeutung, dass die Luft die Düsenöffnung 24 leichter durchtritt als der Kraftstoff. Dadurch wird eine Rückströmung vom Kraftstofffiltergehäuse 2 zum Kraftstofftank erzeugt, die kleiner ist als der Kraftstoffstrom zu der Kraftstofffilteranordnung.

Beim Abstellen der Förderung vom Kraftstoff durch die Ablaufleitung 11 sinkt der Kraftstoffspiegel im Inneren des Kraftstofffiltergehäuses 2 ab, bis die Oberkante des Führungsdoms 10 erreicht ist. Dadurch wird sichergestellt, dass nach dem Abstellen eines Kraftfahrzeugs noch genügend Kraftstoff im Inneren des Kraftstofffiltergehäuses 2 und insbesondere im Führungsdom 10 vorhanden ist, um nach einem Start dessen Anlauf solange sicherzustellen, bis genügend Kraftstoff nachgefördert ist.

Das zweite Ausführungsbeispiel der Erfindung gemäß dem Filterelement 4' hat anstelle der eingeformten Rücklaufleitung 18 ein zwischen eine untere Endscheibe 15' und eine obere Endscheibe 16' eingesetztes Rücklaufleitungsrohr 35 aus Stahlblech. Das Rücklaufleitungsrohr 35 ist in der oberen Endscheibe 16' in einer Führungsöffnung 25' geführt und es ist in der unteren Endscheibe 15' in einer Führungsöffnung 36 geführt. Hierzu ist das Rücklaufleitungsrohr 35 an seiner Oberseite und an seiner Unterseite jeweils mit einer Führungskappe 37 versehen, die jeweils eine Führungsspitze 23' und eine Düsenöffnung 24' aufweist.

## Patentansprüche

1. Filterelement (4; 4') für eine Kraftstofffilteranordnung, wobei das Filterelement (4; 4') eine erste Endscheibe (15; 15') und eine zweite Endscheibe (16; 16') aufweist, zwischen denen sich ein Filtermedium (17) erstreckt, wobei ferner eine sich zwischen der ersten Endscheibe (15; 15') und der zweiten Endscheibe (16; 16') erstreckende Rückführleitung (18; 35) vorgesehen ist, die jeweils in einer Austrittsöffnung (24; 24') auf die Außenseite des Filterelements (4; 4') mündet, **dadurch gekennzeichnet, dass** eine Endscheibe (15, 15') einen ersten Filterdichtbereich (22), der zur Außenseite des Filterelements (4; 4') hin gerichtet ist, und einen zweiten Filterdichtbereich (21) aufweist, der zur Innenseite des Filterelements (4; 4') gerichtet ist, wobei eine Austrittsöffnung der betreffenden Endscheibe (15, 15') zwischen dem ersten Filterdichtbereich (22) und dem zweiten Filterdichtbereich (21) angeordnet ist.

2. Filterelement nach Anspruch 1, **dadurch gekennzeichnet, dass** wenigstens eine Austrittsöffnung (24; 24') einen Durchmesser von ca. 0,2 mm bis 0,5 mm aufweist.

3. Filterelement nach einem der vorhergehenden Ansprüche, **dadurch gekennzeichnet, dass** die Rückführleitung (18) integral in einem als Spritzgussteil ausgebildeten Filterelementträger (15) ausgebildet ist.

4. Filterelement nach einem Ansprüche 1 bis 2, **dadurch gekennzeichnet, dass** die Rückführleitung als Leitungsabschnitt (35) ausgebildet ist, der in Austrittsöffnungen in den Endscheiben (15'; 16') geführt ist.

## Claims

1. Filter element (4; 4') for a fuel -filter arrangement, the filter element (4; 4') featuring a first end plate (15; 15') and a second end plate (16; 16') between which extends a filter medium (17), furthermore a recirculation line (18; 35) extending between the first end plate (15; 15') and the second end plate (16; 16') being provided for, the recirculation line (18; 35) ending in an outlet aperture (24; 24') at the exterior side of the filter element (4; 4'), **characterized in that** one end plate (15; 15') features a first filter sealing area (22) which is directed towards the outside of the filter element (4; 4'), and a second filter sealing area (21) which is directed towards the inside of the filter element (4; 4'), an outlet aperture of the corresponding end plate (15; 15') being arranged between the first filter sealing area (22) and the second filter sealing area (21).

2. Filter element according to claim 1, **characterized in that** at least one outlet aperture (24; 24') has a diameter of approx. 0.2 mm to 0.5 mm.

3. Filter element according to one of the above claims, **characterized in that** the recirculation line (18) is designed integrally in a filter element support designed as injection molded part.

4. Filter element according to one of the claims 1 to 2, **characterized in that** the recirculation line is designed as duct section (35) which leads to the outlet apertures in the end plates (15'; 16').

## Revendications

1. Elément filtrant (4 ; 4') pour un ensemble de filtre à carburant, l'élément filtrant (4 ; 4') présentant une première plaque d' extrémité (15 ; 15') et une deuxième plaque d'extrémité (16 ; 16') entre lesquelles s'étend un milieu filtrant (17), une conduite de retour (18 ; 35) étant par ailleurs prévue entre la première plaque d'extrémité (15 ; 15') et la deuxième plaque d'extrémit é (16 ; 16'), cette conduite de retour (18 ; 35) débouche sur un orifice de sortie (24 ; 24') du côté extérieur de l'élément filtrant (4 ; 4'), **caractérisé en ce qu'** une plaque d'extrémité (15 ; 15') présente une première zone d'étanchéité de filtre (22) dirigée vers le côté extérieur de l'élément filtrant (4 ; 4') et une deuxième zone d'étanchéité de filtre (21) dirigée vers le côté intérieur de l'élément filtrant (4 ; 4'), un orifice de sortie de la plaque d'extrémité concernée (15 ; 15') étant disposé entre la première zone d'étanchéité de filtre (22) et la deuxième zone d'étanchéité de filtre (21).

2. Elément filtrant selon la revendication 1, **caractérisé en ce qu'** au moins un orifice de sortie (24 ; 24') a un diamètre d'env. 0,2 mm à 0,5 mm.

3. Elément filtrant selon l'une des revendications précédentes, **caractérisé en ce que** la conduite de retour (18) est intégralement conçue comme un porte -élément filtrant sous forme de pièce moulée par injection.

4. Elément filtrant selon l'une des revendications 1 ou 2 , **caractérisé en ce que** la conduite de retour est conçue comme section de conduite (35) guidée dans des orifices de sortie situés dans les plaques d'extrémité (15'; 16').
